(19) Europäisches Patentamt

European Patent Office

Office européen des brevets

(11) Publication number: **0 174 861**
**A2**

(12) **EUROPEAN PATENT APPLICATION**

(21) Application number: **85306502.7**

(22) Date of filing: **12.09.85**

(51) Int. Cl.⁴: **C 04 B 32/00**

(30) Priority: **09.10.84 ZA 847891**
**12.09.84 ZA 847166**

(43) Date of publication of application:
**19.03.86 Bulletin 86/12**

(84) Designated Contracting States:
**AT BE DE FR GB IT LU NL SE**

(71) Applicant: **Holland, Phillip Anton**
**14 Robinson Avenue Farra Park**
**Boksburg Transvaal Province(ZA)**

(72) Inventor: **Holland, Phillip Anton**
**14 Robinson Avenue Farra Park**
**Boksburg Transvaal Province(ZA)**

(74) Representative: **Ellis-Jones, Patrick George Armine**
**J.A. KEMP & CO. 14 South Square Gray's Inn**
**London WC1R 5EU(GB)**

(54) **Fired product and method of producing the product.**

(57) A method of producing a fired product is described which comprises preparing a mixture of sand and sufficient sodium chloride to produce a binding phase between sand particles on firing, forming the mix into a desired green product, and firing the green product to bind the constituents into a hard body as formed.

EP 0 174 861 A2

Croydon Printing Company Ltd.

- 1 -

# FIRED PRODUCT AND METHOD OF PRODUCING THE PRODUCT

THIS INVENTION relates to a fired product and a method of producing such a product.

## BACKGROUND TO THE INVENTION

It is known to fire a sand and binder mixture to make building elements such as bricks or blocks. Sand-lime or calcium-silica brickettes are known in this regard. These brickettes however have some disadvantages, in that they require additional ingredients such as cement to be added in the mix, plus a certain percentage of rough stone. The sand content of these brickettes is usually only some 38% of the total weight. Also, the wet and dry shrinkage of these brickettes is not any particular improvement on the conventional clay brick, and the water absorption is extremely low. This latter feature of the calcium-silica or sand-lime brick, necessitates the use of a special mortar when building with these brickettes, since conventional cement mortar does not adhere properly to the brick.

/...

The use of sand to produce a fired product, and particularly a building element, is convenient since in many areas there is an excess of such sand and it is easily available and cheap. For example, in the Republic of South Africa a considerable quantity of sand is available from mine dumps.

In particular, it is now practice to reclaim a variety of valuable metals from mine dumps sand which was mined in years previously when the refining techniques of the time were not as sophisticated as they are today.

One such refining scheme is run in the Republic of South Africa by a company known as "Ergo Limited", and the refining process produces large quantities of sand as a waste product after reclamation of the various elements from the mine dump sand. This sand from the reclamation process will be referred to herein after as "Ergo tailings". The term 'sand' in this specification refers to finely divided siliceous material.

## OBJECT OF THE INVENTION

It is an object of this invention to provide a method for producing an effective fired product for use, inter alia, as a building element, and also to inter alia use waste products such as ergo tailing.

/...

## SUMMARY OF THE INVENTION

In accordance with this invention there is provided a method of producing a fired product comprising preparing a mixture of sand and sufficient sodium chloride to act as a flux for binding the sand on firing, shaping the mix to form a desired green product, and, firing the green product to bind the constituents into a hard body as shaped.

Features of the invention provide for steps in which the sand moisture content is approximately 5%, in which the formed green product is fired without pre-drying, and in which the forming of the product is done by a press moulding.

There is also provided for the mixture to comprise approximately 97% sand and 3% sodium chloride by weight.

Alternatively, for specific applications, the sodium chloride content by weight is between 2 and 4%.

/...

There is further provided for the product formed to be a building element.

Preferably the firing of the product takes place at a temperature between 1050°C and 1200°C, and the temperature during firing is approximately constant.

There is particularly provided for the sand to be Ergo tailings.

As an alternative, the sand may be beach sand, a portion of which is milled to a fine powder.

The mixture of finely powdered beach sand to coarse beach sand can be approximately in the ratio of 6 to 4, or approximately in the ratio of 7to 3.

There is provided for a pluralty of fired products to be produced during a stacked firing process.

## DESCRIPTION OF THE INVENTION

Preferred embodiments of the invention are described below with reference to examples.

Example 1.  Ergo tailings were mixed with sodium chloride in a 97% to 3% mix by weight respectively, with the sand having a 6,1% moisture content. The

Ergo tailings are available in a slurry, and have to be dried to the desired moisture content.  The moist mixture was then formed into test brickettes using a press. The brickettes measured 50mm by 50mm by 25mm.

A screen analysis of the Ergo tailings used showed the following particle size distribution:

| Sieve Aperture $\mu m$ | Percentage, by mass, passing sieve with aperture indicated |
|---|---|
| 200 | 96,8 |
| 150 | 88,8 |
| 100 | 70,8 |
| 75 | 49,6 |
| 50 | 38,4 |
| 38 | 34,,8 |

Firing tests at temperatures ranging from 1000°C to 1300°C were conducted on the green brickettes made following the above method. The firing cycle comprised a one and one half hour heating up to temperature, a one hour soaking period at temperature, followed by cooling of one and a half hours. The tests showed that above 1050°C sintering was achieved and the fired product formed a hard body. Below that temperature bonding was incomplete and the product exhibited a crumbling texture. Between 1050°C and 1200°C, a good hard fired product was obtained.

Stack firing tests were done by stacking brickettes and placing a weight in the form of a carbon rod on the stack. At 1300°C the stacked brickettes exhibited surface fusion.

The product is unlikely to be suitable as a refractory material, as repeated temperature cycles exceeding 1350°C resulted in breakdown of the product. Repeated cycles of 1100°C resulted in spalling of the product.

Further testing produced the following results :

/...

Compressive Strength :

Compression was applied perpendicular to opposite edge surfaces. The compressive strengths ranged between 45 and 60 Mpa for dry testing and 45 and 50 Mpa for wet testing, for brickettes fired between 1050°C amd 1200°C in 50°C increments. At 1000°C, the wet and dry compressive strengths were 20 and 30 Mpa respectively.

Other compressive strengths tested for conventionally sized building bricks made according to a similar method resulted in a 45,1 to a 48,8 wetstrength in Mpa, with compression applied to the usual upper and lower load-bearing surfaces.

Firing Shrinkage :

The firing shrinkage was found to be nil. Firing expansion at 1000° was 1% and at 1200°C was 0,7%, and this expansion was retained after cooling.

Efflorescence :

Efflorescence was detectable on fired samples of 1000°C. After 1050°C, soluble salts found in chemical analysis were insufficient to affect the final product for masonry purposes.

Drying Shrinkage :

The drying shrinkage was found to be nil and water absorption found to be normal for building purposes.

X-Ray diffraction of the product showed the presence of cristobalite in increasing quantities with increasing temperature.

The extent of refractoriness under load, tested as described above by means of a carbon rod weights on stacked green sample products during firing, confirmed that within the given temperature range stack firing was possible.

Microscopic examination of the final product showed that a glass phase bond between the sand articles resulted.

Similar results were obtained with beach sand, but the beach sand requires milling. Sand from the beach at Umhlanga Rocks, Natal Province, Republic of South Africa was collected.

Using sand from the driest upper dunes, 60% of the total sand by weight was milled to a fine powder,

/...

the remaining 40% being coarse beach sand as collected. This sand was mixed with 3% sodium chloride by weight. Tap water was used to moisten the mix to obtain a suitable texture for compacting. Brick wall.

The mixture was formed into a brickette, and fired in a kiln from cold by raising the temperature to 1200°C, and allowing it to cool down in a complete six hour cycle. No pre-drying was done.

A similar brickette was formed and fired, but the mixture was prepared using sand collected from an area settled by the sea, although not moist. Also, 70% of the total weight of sand was milled to a fine powder and mixed with 30% of the coarse sand as collected.

The sea sand brickettes were not subjected to extensive tests, but presented a hard and apparently durable product.

It will be appreciated by those skilled in the art that the particle size distribution of the sand used will affect the ability to shape the green mixture, the porosity of the fired product, and its

/...

strength. A selection must be made to obtain a desired result, and the application of the product is not necessarily limited to building elements. Similarly, the proportion of sodium chloride used can be varied to obtain a desired result. Tests using a 1,5% sodium chloride mix gave a hard product but it is suspected that the sand bonding is insufficient to make the product durable for use as a building element. Tests with a 5% sodium chloride mix gave an apparently well bonded hard product, but efflorescence is too high for use as a building element; the exhaust gases during firing are also highly corrosive. It is believed that a 2-4% sodium chloride mix provides a workable range for a building element.

The use of a moist mixture, with a suitable particle size distribution, is convenient for shaping a green product. A moisture content of 5-6% is considered desirable for allowing shaping, but it will be appreciated that the shaping of a mixture may be achieved for example, by placing the mixture in a refractory mould, or by pressure.

/...

The firing cycle used will clearly vary with application. Using a tunnel furnace with stacked products in a full scale production line, it is estimated that a 30 hour cycle will be required, but this has not been confirmed in practice.

It is not fully understood what action the sodium chloride has upon the sand particles on firing. It is speculated that the sodium chloride may act as a flux, or may cause a chemical bonding, or the effect may be a combination of both. The sodium chloride does however cause a binding phase between the sand particles on

/...

CLAIMS

1.      A method of producing a fired product comprising preparing a mixture of sand and sufficient sodium chloride to produce a binding phase between sand particles on firing, forming the mix into a desired green product, and firing the green product to bind the constituents into a hard body as formed.

2.      A method as claimed in claim 1 in which the sand moisture content is approximately 5%.

3.      A method as claimed in claim 1 or 2 in which the formed green product is fired without pre-drying.

4.      A method as claimed in claim 2 or 3 in which the forming of the product is done by a press moulding.

5.      A method as claimed in any one of claims 1 to 4 in which the sodium chloride content by weight is from 1.5 to 5%.

6.      A method as claimed in claim 5 in which the sodium chloride content by weight is from 2 to 4%.

7.      A method as claimed in any one of claims 1 to 6 in which the mixture comprises approximately 97% sand and 3% sodium chloride by weight.

8.      A method as claimed in any one of claims 1 to 7 in which the product formed is a building element.

9.      A method as claimed in any one of the preceding claims in which the firing of the product takes place at a temperature from $1050^{\circ}C$ to $1200^{\circ}C$.

0174861

- 13 -

10. A method as claimed in any one of the preceding claims in which the temperature during firing is approximately constant.

11. A method as claimed in any one of the preceding claims in which the sand is Ergo tailings.

12. A method as claimed in any one of the preceding claims in which the sand is beach sand, a portion of which is milled to a fine powder.

13. A method as claimed in claim 12 in which the mixture of finely powdered beach sand to coarse beach sand is approximately in the ratio of 6 to 4.

14. A method as claimed in claim 12 in which the mixture of finely powdered beach sand to coarse beach sand is approximately in the ratio of 7 to 3.

15. A method as claimed in any one of the preceding claims in which a plurality of fired products are produced during a stacked firing process.